# EUROPÄISCHE PATENTSCHRIFT

(11) **EP 3 331 839 B1**
(45) Veröffentlichungstag und Bekanntmachung des Hinweises auf die Patenterteilung: **09.09.2020**
(21) Anmeldenummer: 16744373.8
(22) Anmeldetag: 26.07.2016
(51) Int. Cl.: C04B 28/26, C04B 28/34, C04B 22/16

(54) **BORARMES BIS BORFREIES ANORGANISCHES BINDEMITTELSYSTEM**
BORON-LOW TO BORON-FREE INORGANIC BINDER SYSTEM
SYSTÈME DE LIANT INORGANIQUE PAUVRE EN BORE OU EXEMPT DE BORE

(30) Priorität: 05.08.2015 DE 102015112899
(43) Veröffentlichungstag der Anmeldung: 13.06.2018
(73) Patentinhaber: Chemische Fabrik Budenheim KG, 55257 Budenheim (DE)
(72) Erfinder: LEISTER, Michael, 55218 Ingelheim (DE); LIPPOLD, Kirstin, 55268 Nieder-Olm (DE)
(74) Vertreter: WSL Patentanwälte Partnerschaft mbB
(86) Internationale Anmeldenummer: PCT/EP2016/067772
(87) Internationale Veröffentlichungsnummer: WO 2017/021212

(56) Entgegenhaltungen:
- EP-A1- 2 433 919
- DE-A1- 2 443 717
- DE-A1- 3 043 856
- DE-A1- 4 225 861
- DE-C2- 2 540 756
- JP-A- H11 246 261

## Beschreibung

Die vorliegende Erfindung betrifft ein Bindemittelsystem mit einer Binderkomponente aus Alkalisilicat und mit einer Härterkomponente mit Anteilen an Metallsilicat-, Metallphosphat-, Metalloxid- und/oder Metallhydroxid sowie ein Verfahren zur Herstellung des Bindemittels und ein Verfahren zur Herstellung von Verbundkörpern.

Bindemittel dienen primär dazu, Feststoffe mit einem feinen Zerteilungsgrad miteinander zu verbinden. Bei den auf diese Weise gebundenen Feststoffen kann es sich entweder um Füllstoffe handeln, die vorrangig dazu dienen, das Volumen eines Stoffgemischs zu erhöhen, ohne dabei die wesentlichen Eigenschaften des Stoffgemisches zu ändern, oder um Funktionsstoffe, die vorrangig dazu dienen, einem Stoffgemisch bestimmte Eigenschaften zu verleihen.

Die Kombination des Bindemittels mit den damit gebundenen Füllstoffen wird als Verbund bezeichnet. Ein solcher Verbund kann als ein dreidimensionaler Formkörper der gewünschten Gestalt geformt und in dieser Form ausgehärtet werden. Die Kombination aus Bindemittel und damit gebundenen Feststoffen kann aber auch auf ein Substrat aufgebracht werden, um auf diesem nach dem Aushärten eine Beschichtung zu bilden, die fest mit dem Substrat verbunden ist.

Aus dem Stand der Technik sind anorganische Bindemittel bekannt, die auf der Kombination von löslichen oder gelösten Alkalisilicaten mit geeigneten Reaktionspartnern beruhen. Die Kombination eines pulverförmigem Alkalisilicates mit ebenfalls pulverförmigen Reaktionspartnern, wird üblicherweise als Einkomponenten-Bindemittel für Mörtel und Kitte im Bau-, Gartenbau- und Feuerfestbereich verwendet.

Übliche in der Literatur (z.B. DE 10 2008 033 447) beschriebene Reaktionspartner für Alkalisilicate sind organische und anorganische Säuren, Kohlendioxid, Silicofluoride, Kohlensäureester, Glycolide, Acetate aber auch verschiedene Metallphosphate und Polyphosphate. Diese Reaktionspartner werden oft als Wasserglashärter bezeichnet.

Nachteilig an allen organischen Reaktionspartnern, wie beispielsweise organische Säuren, Kohlensäureestern, Glycoliden und Acetaten, ist deren Brennbarkeit, die Gefahr von Staubexplosionen und die thermische Zersetzung bei höheren Temperaturen. Unter anderem aus diesen Gründen können Bindemittel und daraus hergestellte Formkörper, die organische Bestandteile enthalten nicht in die Baustoffklasse A1 eingestuft werden.

Nachteilig am Einsatz von Kohlendioxid als Härterkomponente ist der hohe Aufwand einer Nachbegasung hergestellter Formkörper. Da das Kohlendioxid zudem von außen zu wirken beginnt und die Härtungsreaktion weiteres Eindringen ins Volumen unterdrückt, ist eine komplette Durchhärtung voluminöser Formkörper sehr zeitaufwändig oder nahezu unmöglich.

Nachteilig am Einsatz von Silicofluoriden sind deren Toxizität und die Entstehung von Fluorwasserstoff (Flusssäure) im Härtungsprozess.

In den Schriften DE 24 43 717 und DE 30 43 856 werden anorganische Bindemittel aus Alkalisilicaten, Boraten, Borsäure, Boroxid oder Mischungen daraus mit Metallphosphaten, -silicaten, -oxiden, -hydroxiden, -carbonaten, -sulfaten und -nitraten als Härtersysteme beschrieben. DE 24 43 717 verlangt einen Anteil an Boratkomponente von wenigstens 2 Gewichtsteilen pro 100 Gewichtsteile Silikat, wobei 5 Gewichtsteile und mehr pro 100 Gewichtsteile Silikat als bevorzugt gelten. Gemäß DE 30 43 856 soll der Anteil an Boraten im Bereich von 5 bis 50 Gew.-% liegen.

In WO2015/124349 A1 wird ein Bindemittel für Verbundwerkstoffe beschrieben, das neben Alkalisilicaten und Zinkphosphaten auch einen Anteil an Boraten aufweist, wobei der Boratanteil im Bereich von 5 bis 50 Gew.-% liegen soll, um die gewünschten Eigenschaften hinsichtlich Bindefähigkeit und Abbindegeschwindigkeit zu erzielen.

Die vorgenannten Härter mit signifikanten Anteilen an löslichen Boraten, die entweder gezielt zugegeben werden oder die während des Abbindeprozesses entstehen, sind mit einem wesentlichen Nachteil behaftet. Da lösliche Borate mittlerweile als teratogen bzw. reprotoxisch eingestuft werden oder im Verdacht stehen, entsprechende Eigenschaften zu haben, unterliegen Materialien mit signifikanten Anteilen an löslichen Boraten in vielen Ländern bestimmten Verwendungs- und Kennzeichnungsrestriktionen.

Es bestand daher ein Bedarf nach einem neuen Bindemittel mit kurzen Abbinde- und Aushärtungszeiten, das nicht mit den Nachteilen der aus dem Stand der Technik bekannten Bindemittel behaftet ist und mit dem Verbundmaterialien erhalten werden können, die eine hohe Wasser-, Witterungs- und Temperaturbeständigkeit aufweisen. Insbesondere bestand ein Bedarf nach einem neuen Bindemittel mit kurzen Abbinde- und Aushärtungszeiten, das möglichst geringe Anteile an löslichen Boraten aufweist ("boratarm") oder sogar im wesentlichen boratfrei ist.

Diese Aufgabe wird erfindungsgemäß dadurch gelöst, dass ein Bindemittelsystem bereitgestellt wird, das eine Binderkomponente aus Alkalisilicat und eine Härterkomponente mit Anteilen an Metallsilicat-, Metallphosphat-, Metalloxid- und/oder Metallhydroxid aufweist, wobei das Bindemittelsystem dadurch gekennzeichnet ist, dass es boratfrei ist oder weniger als 2 Gew.-% an Boraten, berechnet als Anteil an B₂O₃ in Gew.-% bezogen auf das Gesamtgewicht des Bindemittelsystems, aufweist und zu wenigstens 90 Gew.-% aus einer Bindemittelbasis mit der folgenden Zusammensetzung besteht:

| | |
|---|---|
| 60-75 Gew. % | wenigstens ein pulverförmiges Alkalisilicat der molaren Formel: R₂O·x SiO₂, mit R = Na oder K und 2,0 ≤ x ≤ 3,35 mit einem Glühverlust nach Tempern für 2 Stunden bei 800°C in dem Bereich von 8-22 Gew.-% |
| 2,9-18,1 Gew. % | wenigstens ein Aluminium-, Calcium- oder Magnesiumsilicat |
| 1,4-20 Gew. % | Zinkphosphat |
| 1,0-11,4 Gew. % | wenigstens eine Verbindung aus der Gruppe: Magnesiumoxid, Zinkoxid, Magnesiumhydroxid und Aluminiumhydroxid. |

Das Bindemittelsystem der vorliegenden Erfindung zeichnet sich unter anderem dadurch aus, dass es weniger als 2 Gew.-% an Boraten, berechnet als Anteil an B₂O₃ in Gew.-% bezogen auf das Gesamtgewicht des Bindemittelsystems, enthält oder boratfrei ist.

Vorzugsweise beträgt sogar der Anteil an Borverbindungen insgesamt (d.h. einschließlich Borate), weniger als 2 Gew.-%, berechnet als Anteil an B₂O₃ in Gew.-% bezogen auf das Gesamtgewicht des Bindemittelsystems, damit während der Abbindereaktion nicht mehr Borat entstehen kann als akzeptabel ist.

Je nach Anforderungen enthält das Bindemittelsystem der vorliegenden Erfindung weniger als 1,5 Gew.-% oder gar weniger als 1,0 Gew.-% an Boraten, berechnet als Anteil an B₂O₃ in Gew.-% bezogen auf das Gesamtgewicht des Bindemittelsystems. Vorzugsweise beträgt sogar der Anteil an Borverbindungen insgesamt (d.h. einschließlich Borate) weniger als 1,5 Gew.-% oder gar weniger als 1,0 Gew.-%, berechnet als Anteil an B₂O₃ in Gew.-% bezogen auf das Gesamtgewicht des Bindemittelsystems, damit während der Abbindereaktion nicht mehr Borat entstehen kann als gewünscht ist.

Bei besonders strengen Anforderungen enthält das Bindemittelsystem der vorliegenden Erfindung weniger als 0,5 Gew.-%, weniger als 0,2 Gew.-% oder gar weniger als 0,1 Gew.-% an Boraten, berechnet als Anteil an B₂O₃ in Gew.-% bezogen auf das Gesamtgewicht des Bindemittelsystems. Vorzugsweise beträgt sogar der Anteil an Borverbindungen insgesamt (d.h. einschließlich Borate), weniger als 0,5 Gew.-%, weniger als 0,2 Gew.-% oder gar weniger als 0,1 Gew.-%, berechnet als Anteil an B₂O₃ in Gew.-% bezogen auf das Gesamtgewicht des Bindemittelsystems, damit während der Abbindereaktion nicht mehr Borat entstehen kann als gewünscht ist.

Bindemittelsysteme, die weniger als 2 Gew.-% oder gar weniger als 1 Gew.-% an Boraten und/oder Borverbindungen insgesamt enthalten, werden im Zusammenhang mit der vorliegenden Erfindung als "boratarm" bzw. "borarm" bezeichnet. Bindemittelsysteme, die weniger als 0,5 Gew.-% oder gar weniger als 0,2 Gew.-% an Boraten und/oder Borverbindungen insgesamt enthalten, werden im Zusammenhang mit der vorliegenden Erfindung als "im wesentlichen boratfrei" bzw. "im wesentlichen borfrei" bezeichnet. Bindemittelsysteme, die weniger als 0,1 Gew.-% an Boraten und/oder Borverbindungen insgesamt enthalten, werden im Zusammenhang mit der vorliegenden Erfindung als "boratfrei" bzw. "borfrei" bezeichnet.

Ein auf der Grundlage der erfindungsgemäßen Bindemittelbasis erhältliches Bindemittel weist eine hohe Reaktivität auf und gewährleistet damit kurze Abbinde- und Aushärtungszeiten, was insbesondere für schnell getaktete industrielle Prozesse, wie beispielsweise das Herstellen von Formkörpern, erforderlich ist. Gleichzeitig bietet ein aus dem erfindungsgemäßen Bindemittel erzeugter Verbund eine hohe Wasser- und Witterungsbeständigkeit sowie eine hohe Temperaturbeständigkeit von bis zu 750°C. Demnach haben die Erfinder der vorliegenden Erfindung überraschenderweise herausgefunden, dass auch mit einem boratarmen bis boratfreien Bindemittelsystem der vorliegenden Art ein Bindemittel mit exzellenten Festigkeitseigenschaften erhalten werden kann.

Da das nach der Erfindung erhältliche Bindemittel keine oder wenn dann nur sehr geringe Mengen an toxischen oder reprotoxischen Boraten enthält, da diese weder im Ausgangsmaterial in nennenswerten Menge enthalten sind noch während der Abbindereaktion in nennenswertem Umfang entstehen, unterliegt das nach der Erfindung erhältliche Bindemittel je nach Anforderung damit auch keinen diesbezüglichen Verwendungs- und Kennzeichnungsrestriktionen.

Das Bindemittelsystem mit der erfindungsgemäßen Zusammensetzung ist geeignet zur Herstellung von Verbundwerkstoffen und Formkörpern aus den unterschiedlichsten Substraten. So können sowohl anorganische Materialien, wie beispielsweise Mineralien, Gläser oder Metalle als auch organische Materialien, wie beispielsweise Kunststoffe, nachwachsende Rohstoffe oder Recyclingmaterialien gebunden werden. Besonders gut geeignet ist das Bindemittel für die Herstellung von Verbundwerkstoffen und Formkörpern aus offen- oder geschlossenzelligen geblähten Mineralien, wie beispielsweise: Blähton, Perlit oder geschäumten Gläsern.

Das Bindemittel ist nicht brennbar, wasser- und witterungsbeständig, sowie UV-resistent und UVblockend. Darüber hinaus kann es durch den Zusatz geeigneter Farbstoffe und Pigmente auch infrarotabsorbierend oder -reflektierend eingestellt werden. Die mit dem erfindungsgemäßen Bindemittel überzogenen Produkte und die daraus hergestellten Verbundwerkstoffe können sowohl im Innen- als auch im Außenbereich vielfältig eingesetzt werden.

Die erfindungsgemäße Binderkomponente basiert auf Alkalisilicaten der oben angegebenen allgemeinen molaren Formel. Diese Alkalisilicate besitzen ein molares Modul SiO₂/R₂O (mit R= Na, K) im Bereich von 2,0 bis 3,35 und haben einen Wassergehalt von 8 bis 22 Gew.-% gemessen als Glühverlust nach 2 Stunden Tempern bei 800°C. Bei bestimmten Ausführungsformen ist es bevorzugt, wenn die eingesetzten Alkalisilicate eine Korngröße (Äquivalentdurchmesser) im Bereich von 1 bis 600 µm aufweisen. Vorzugsweise liegt die mittlere Korngröße im Bereich von 50-130 µm. Der Begriff "mittlere Korngröße" wird dabei im Besonderen und im Zusammenhang mit der vorliegenden Erfindung allgemein durchgehend so verstanden, dass hiermit der statistische Mittelwert der volumenäquivalenten Kugeldurchmesser der untersuchten Körner bezeichnet wird. Vorzugsweise sind die eingesetzten Alkalisilicate gut wasserlöslich, d.h. bei 20°C zu mindestens 99,5% wasserlöslich.

Niedrigere molare Module wären zu reaktiv um die Aushärtungsreaktion im gesamten Volumen vollständig und gleichmäßig ablaufen zu lassen. Zudem würde der damit verbundene hohe R₂O-Anteil keine ausreichenden Wasserfestigkeiten der Bindung zulassen. Alkalisilicate mit höherem molaren Modul sind dagegen nicht reaktiv genug, um mit der erfindungsgemäßen Reaktionspartnern aus der Härterkomponente in der gewünschten Geschwindigkeit und Abbindegüte zu reagieren.

Geringere Korngrößen der Binderkomponente wären ebenfalls zu reaktiv, würden beim Einsatz des Bindemittel zu starker Staubentwicklung führen und die Haltbarkeit des Bindemittels, aufgrund ihrer durch die größere Oberfläche vergrößerten Wasseraufnahme, stark absenken. Höhere Korngrößen wären dagegen zu inreaktiv und deren Verteilungsgrad und Lösungsgeschwindigkeit wären zu gering.

Bei Wassergehalten (gemessen als Glühverlust bei 800°C) von unterhalb 8 Gew.-% sind die Löslichkeit und die Lösegeschwindigkeit der Alkalisilicate nicht optimal. Wassergehalte (gemessen als Glühverlust bei 800°C) oberhalb von 22 Gew.-% wirken sich auf die Haltbarkeit und Lagerfähigkeit des Bindemittels negativ aus, da die einzelnen Komponenten in diesem Fall unter Umständen bereits ohne weitere Wasserzugabe miteinander reagieren können.

Im Allgemeinen liegt gemäß der vorliegenden Erfindung der Anteil der Binderkomponente am Bindemittel bezogen auf die Bindemittelbasis im Bereich von 60 bis 75 Gew.-%. Bei bestimmten Ausführungsformen liegt der Anteil der Binderkomponente am Bindemittel bezogen auf die Bindemittelbasis in dem Bereich von 62 bis 70 Gew.-% oder in dem Bereich 65 bis 68 Gew.-%.

Die erfindungsgemäße Härterkomponente basiert auf dem Zusatz einer Kombination von
a) wenigstens einem Aluminium-, Calcium- oder Magnesiumsilicat,
b) Zinkphosphat und
c) wenigstens einer Verbindung aus der Gruppe: Magnesiumoxid, Zinkoxid, Magnesiumhydroxid und Aluminiumhydroxid.

Bei bestimmten Ausführungsformen der Erfindung, bei denen die Härterkomponente Aluminiumsilicat umfasst, weist der Aluminiumsilicatanteil einen Anteil an wenigstens einem Kaolinmineral auf oder besteht sogar vollständig daraus.

Bei bestimmten Ausführungsformen der Erfindung, bei denen die Härterkomponente Calciumsilicat umfasst, weist der Calciumsilicatanteil einen Anteil an wenigstens einem Wollastonitmineral auf oder besteht sogar vollständig daraus.

Bei bestimmten Ausführungsformen der Erfindung, bei denen die Härterkomponente Magnesiumsilicat umfasst, weist der Magnesiumsilicatanteil einen Anteil an wenigstens einem Talkummineral auf oder besteht sogar vollständig daraus.

Bei den Ausführungsformen der Erfindung, bei denen die Härterkomponente Zinkphosphat umfasst, besteht der Zinkphosphatanteil entweder aus Zinkorthophosphat einer bestimmten Hydratstufe oder aus verschiedenen Zinkorthophosphaten unterschiedlicher Hydratstufen.

Im Allgemeinen liegt gemäß der vorliegenden Erfindung der Anteil der Härterkomponente am Bindemittel bezogen auf die Bindemittelbasis im Bereich von 25 bis 40 Gew.-%. Bei bestimmten Ausführungsformen liegt der Anteil der Härterkomponente am Bindemittel bezogen auf die Bindemittelbasis im Bereich von 27 bis 35 Gew.-% oder in dem Bereich 28 bis 34 Gew.-%.

Durch das Anteilsverhältnis der Komponenten des Bindemittelsystems lassen sich die Abbindegeschwindigkeit, sowie Wasser- und Witterungsbeständigkeit je nach Bedarf optimal einstellen und aufeinander abstimmen. So werden schnell ausreichend hohe Festigkeiten der Bindemittelmasse erreicht, was insbesondere für schnell getaktete industrielle Prozesse, wie beispielsweise das Herstellen von Formkörpern wichtig ist, ohne diese jedoch zu schnell durchzuhärten, was sich negativ auf deren Wasser und Witterungsbeständigkeit auswirken würde. Je nach Bedarf lassen sich durch die Variation des Verhältnisses der Komponenten sowohl Abbindegeschwindigkeit als auch Wasser- und Witterungsbeständigkeit innerhalb eines bestimmten Rahmens einstellen.

Zur Bereitstellung des Bindemittelsystems in Pulverform liegen zumindest die Binderkomponente und die Härterkomponente als vollständig vorgefertigte Mischung in Pulverform vor. Vorzugsweise weist die Komponente aus Aluminium-, Calcium- und/oder Magnesiumsilicat eine Korngröße (Äquivalentdurchmesser) im Bereich von 1 bis 200 µm auf. Vorzugsweise liegt die mittlere Korngröße im Bereich von 1 bis 50 µm.

Vorzugsweise weist die Komponente aus Zinkphosphat eine Korngröße (Äquivalentdurchmesser) im Bereich von 1 bis 100 µm auf. Vorzugsweise liegt die mittlere Korngröße im Bereich von 5 bis 50 µm.

Vorzugsweise weist die Komponente aus Magnesiumoxid, Zinkoxid, Magnesiumhydroxid und/oder Aluminiumhydroxid eine Korngröße (Äquivalentdurchmesser) im Bereich von 1 bis 100 µm auf. Vorzugsweise liegt die mittlere Korngröße im Bereich von 5 bis 50 µm.

Zur Erhöhung der Reaktivität und damit der Abbindegeschwindigkeit kann es in bestimmten Fällen vorteilhaft sein, die Korngröße der Härterkomponente beispielsweise durch einen Mahlschritt zu verkleinern und eine Korngröße (Äquivalentdurchmesser) im Bereich von 1 bis 20 µm einzustellen. Vorzugsweise liegt die mittlere Korngröße der Härterkomponente im Bereich von 4 bis 8 µm.

Die Vorteile des erfindungsgemäßen Bindemittelsystems werden durch die oben beschriebene Zusammensetzung der Bindemittelbasis erreicht. Zur Einstellung bestimmter zusätzlicher Eigenschaften ist es für bestimmte Ausführungsformen jedoch vorteilhaft der Kombination aus Binderkomponente und Härterkomponente eine oder mehrere Funktionskomponenten zuzusetzen.

Die Vorteile des erfindungsgemäßen Bindemittelsystems werden durch die oben beschriebene Zusammensetzung der Bindemittelbasis erreicht. Hierfür besteht das Bindemittelsystem zu wenigstens 90 Gew.-% aus dieser Bindemittelbasis. Bei bestimmten Ausführungsformen besteht das Bindemittelsystem zu wenigstens 95 Gew.-%, wenigstens 98 Gew.-%, wenigstens 99 Gew.-% oder gar 100 Gew.-% aus dieser Bindemittelbasis.

Zur Einstellung bestimmter zusätzlicher Eigenschaften ist es für bestimmte Ausführungsformen vorteilhaft der Kombination aus Binderkomponente und Härterkomponente eine oder mehrere Funktionskomponenten zuzusetzen. Bei den Ausführungsformen bei denen das Bindemittelsystem nicht zu 100 Gew.-% aus der Bindemittelbasis besteht, sind neben der Bindemittelbasis noch weitere Bestandteile enthalten, die in der Summe jedoch nicht mehr als einen Anteil von bis zu 10 Gew.-% an dem Bindemittelsystem ausmachen dürfen. Bei bestimmten Ausführungsformen macht die Summe der Anteile der zusätzlichen Bestandteile, die neben der Bindemittelbasis in dem Bindemittelsystem enthalten sind, höchstens 5 Gew.-%, höchstens 2 Gew.-% oder gar nur höchstens 1 Gew.-% aus.

Beispielsweise kann es zur Verbesserung der Fließeigenschaften, zur Verhinderung von Verklumpungen und Verbackungen und zur Verbesserung des Benetzungsverhaltens zweckmäßig sein, dem Bindemittelsystem ein übliches Trennmittel und/oder Fließmittel und/oder Benetzungsmittel zuzugeben. Bei einer Ausführungsform der Erfindung ist neben der Bindemittelbasis daher zusätzlich noch ein Anteil von bis zu 2 Gew.-% eine Funktionskomponente in Form eines Trenn-, Fließ- und/ oder Benetzungsmittels enthalten. Bei bestimmten Ausführungsformen der Erfindung beträgt der Anteil der Hilfsstoffkomponenten nur bis zu 1 Gew.-%.

Zur Verbesserung der wasserabweisenden Eigenschaften des Verbundsystems kann es außerdem zweckmäßig sein, das das Bindemittelsystem bis zu 4 Gew.-% eines pulverförmigen Hydrophobierungsmittels enthält.

Zur Verbesserung und /oder zur Erzielung IR-absorbierender, reflektierender und/oder farbgebender Eigenschaften kann es zweckmäßig sein, dem Bindemittelsystem bis zu 3 Gew.-% eines Pigmentes und/oder Farbstoffes zuzusetzen.

Die zur vollständigen Abbindung und Aushärtung des erfindungsgemäßen Bindemittelsystems notwendigen Temperaturen liegen abhängig vom Verhältnis und der Reaktivität der Komponenten, dem Anteil an zugesetztem Wasser, sowie den Prozesszeiten der einzelnen Verfahrensschritte in dem Bereich von 0 bis 120°C.

Ein kurzzeitiges Erhöhen der Temperatur über 100°C oder eine Behandlung des Verbundwerkstoffes mit Mikrowellenstrahlung (spezifischer Energiewert: 2,5-12,0 kJ/g Formkörper abhängig von der zugesetzten Wassermenge) verbessert allerdings die Festigkeit und die Witterungs- und Wasserbeständigkeit auf jeden Fall.

Das erfindungsgemäße Bindemittelsystem dient in erster Linie dem Verbinden von Feststoffpartikeln, unter die es gemischt werden kann. Hierbei kann es sich entweder um Füllstoffe handeln, die vorrangig dazu dienen, das Volumen eines Stoffgemischs zu erhöhen, ohne dabei die wesentlichen Eigenschaften des Stoffgemisches zu ändern, wie zum Beispiel Sand, Perlit oder Holzhackschnitzel, oder um Funktionsstoffe, die vorrangig dazu dienen, einem Stoffgemisch bestimmte Eigenschaften zu verleihen, wie zum Beispiel Glas-, Kohlenstoff- oder Keramikfasern.

Zur Anwendung des erfindungsgemäßen Bindemittelsystems sind verschiedene Methoden und Verfahren möglich. Zum einen können die einzelnen Komponenten des erfindungsgemäßen Bindemittelsystems in Pulverform gemeinsam mit zu bindendem Füllstoff einzeln zugegeben und homogen miteinander vermischt werden. Anschließend wird dann durch Zugabe und Einmischen von Wasser die Abbindereaktion gestartet.

Üblicherweise wird aber zunächst eine homogene Vormischung des erfindungsgemäßen Bindemittels aus der Binderkomponente und der Härterkomponente und gegebenenfalls der oder den Funktionskomponente(n) hergestellt. Diese Mischung wird in einem zweiten separaten Mischvorgang mit dem zu bindenden Füllstoff homogen vermischt. Anschließend wird durch Zugabe und Einmischen von Wasser die Abbindereaktion gestartet. Es ist aber ebenso möglich zunächst den zu bindenden Füllstoff mit der erforderlichen Menge Wasser zu versetzen und dieses homogen einzumischen, um erst danach in einem zweiten Verfahrensschritt das vorgemischte pulverförmige Bindemittel zuzusetzen und damit die Abbindereaktion zu starten.

Im Falle leicht quellender oder saugfähiger Füllstoffe bzw. Funktionsstoffe sollte bevorzugt das erste Verfahren angewendet werden, um die benötigte und anschließend wieder zu entfernende Wassermenge so gering wie möglich zu halten. Das zweite Verfahren eignet sich hingegen insbesondere für nicht quellende oder saugfähige Materialien, deren Oberfläche so zunächst mit einem gleichmäßigen Feuchtigkeitsfilm überzogen werden kann.

Die Reaktivität des erfindungsgemäßen Bindemittelsystems kann so abgestimmt werden, dass nach Wasserzugabe bzw. dem Kontakt mit bereits zugegebenem Wasser bereits nach wenigen Minuten eine mechanische Festigkeit des Verbundes erreicht wird, die mechanische Manipulationen, wie die Entnahme aus Formwerkzeugen, ein Transportieren, das Stapeln oder das Umsetzen ermöglicht. Die Reaktivität des erfindungsgemäßen Bindemittelsystems kann aber auch so abgestimmt werden, dass eine mindestens 60 minütige offene Verarbeitungszeit entsteht oder dass ohne Temperaturerhöhung keine Abreaktion des Bindemittels stattfindet.

Bei dem erfindungsgemäßen Verfahren gemäss Anspruch 9 wird dem erfindungsgemäßen Bindemittelsystem mit der oben spezifizierten Zusammensetzung Wasser zugesetzt, wobei das Gewichtsverhältnis Wasser zu Bindemittelsystem in dem Bereich von 0,5 bis 2,5 liegt. Hierdurch wird die Abbindereaktion der einzelnen Komponenten miteinander in Gang gesetzt, und das dadurch entstehende Bindemittel härtet aus.

Bei einer Ausführungsform der erfindungsgemäßen Verfahren wird die Bindereaktion bei Temperaturen in dem Bereich von 0 bis 120°C durchgeführt. Bei manchen Ausführungsformen wird die Bindereaktion bei Temperaturen in dem Bereich von 20 bis 45°C durchgeführt.

Je nachdem, wie die Reaktivität des erfindungsgemäßen Bindemittelsystems eingestellt wird, ist die Aushärtung des erfindungsgemäßen Bindemittels bei manchen Ausführungsformen bereits nach 30 Minuten so weit vorangeschritten, dass das Bindemittel eine so hohe Festigkeit erlangt hat, dass es kaum noch verformt werden kann. Bei bestimmten Ausführungsformen ist die Aushärtung des erfindungsgemäßen Bindemittels sogar schon nach 15 Minuten so weit vorangeschritten, dass das Bindemittel eine so hohe Festigkeit erlangt hat, dass es kaum noch verformt werden kann.

Für Zwecke der ursprünglichen Offenbarung wird darauf hingewiesen, dass sämtliche Merkmale, wie sie sich aus der vorliegenden Beschreibung und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

### Ausführungsbeispiele

In den folgenden Beispielen wird anhand von gepressten Formkörpern aus geblähtem Perlit gezeigt, wie mit dem erfindungsgemäßen Bindemittelsystem die gewünschten Eigenschaften, wie kurze Abbinde- und Entformungszeit, hohe Wasser- und Witterungsbeständigkeit und Festigkeiten, bei vergleichsweise geringen Formkörperdichten erreicht werden können. Die Vorteile des erfindungsgemäßen Bindemittelsystems werden durch einen Vergleich mit Beispielen identisch hergestellter Formkörper mit nicht erfindungsgemäßen z.T. kommerziell erhältlichen Bindemitteln bzw. Bindemittelkomponenten unterstrichen.

Alle Formkörper wurden aus einem offenzelligen, geblähten Perlit mit einer Schüttdichte von 125 kg/m³, hergestellt. Als Verdichtungsverhältnis des Pressvorganges wurde 1,45 gewählt. Der Bindemittelanteil betrug in allen Fällen 33,6 kg/m³ bezogen auf das Endvolumen des Formkörpers. Es wurden mit jeder Bindemittelzusammensetzung jeweils zwei identische Formkörper hergestellt.

Die Zusammensetzung verschiedener Bindemittel einer ersten Versuchsgruppe ist der Tabelle 1 zu entnehmen:

**Tabelle 1: Zusammensetzung verschiedener Bindemittel einer ersten Versuchsgruppe**

| **Komponente** | **Molares Modul (SiO₂%/Na₂O%)** | **Korngröße (µm)** | **mittlere Korngröße (µm)** | **Glühverlust (%)** | **Zusammensetzung (Gew. %)** | | | | | | | | | |
|---|---|---|---|---|---|---|---|---|---|---|---|---|---|---|
| | | | | | **P1^{a}** | **P2^{a}** | **P3^{a}** | **P4^{a}** | **P5^{a}** | **P6^{a}** | **P7^{b}** | **P8^{b}** | **P9^{b}** | **P10^{b}** |
| Natriumsilicat | 2,13 | 10-480 | 130 | 19,3 | 60,0 | 64,0 | 68,0 | 70,0 | 75,0 | | 67,0 | 65,0 | | 70,0 |
| | 2,64 | 10-420 | 90 | 18,6 | | | | | | 72,0 | | | 60,0 | |
| Wollastonit | - | 1-200 | 10 | - | | 8,0 | | | 2,9 | 4,0 | | | | 8,0 |
| | | 4-200 | 50 | - | | | 12,0 | 3,5 | | | 12,0 | 9,0 | 17,5 | |
| Talkum | - | 1-100 | 40 | - | | 7,0 | | 10,0 | | | | | | |
| Kaolin | - | 1-45 | 2 | - | | | 3,0 | 6,0 | | | | | | |
| | | 1-45 | 1,7 | - | 18,1 | | | | | | | | | |
| Zinkphosphat | - | 1-45 | 10 | - | | 8,5 | | 1,4 | 20 | 18 | | 10 | | 8,5 |
| | | 1-45 | 7 | - | 10,5 | | 7 | | | | 14 | | 3 | |
| Magnesiumoxid | - | 1-45 | 13 | - | 5,0 | | | | | | | | | 1,5- |
| | | 1-45 | 11 | - | | | | 2,0 | | | | | | |
| Zinkoxid | - | 1-40 | 5 | - | 3,0 | 6,0 | | 2,0 | 2,1 | 4,0 | 1,0 | | | |
| Magnesiumhydroxid | - | 1-45 | 10 | - | | 6,5 | | 2,0 | | | | | 1,5 | |
| Aluminiumhydroxid | - | 1-100 | 25 | - | 3,4 | | 10,0 | 3,1 | | 2,0 | | 1,0 | | |
| Zinkborat | - | 1-30 | 10 | 14,5 | | | | | | | 5 | 15 | 18 | 10 |

| | | | | | | | | | | | | | | |
|---|---|---|---|---|---|---|---|---|---|---|---|---|---|---|
| a = erfindungsgemäß; b= nicht erfindungsgemäß | | | | | | | | | | | | | | |

Die Zusammensetzung weiterer Bindemittel einer zweiten Versuchsgruppe ist der Tabelle 2 zu entnehmen:

**Tabelle 2: Zusammensetzung verschiedener nicht erfindungsgemäßer Bindemittel einer zweiten Versuchsgruppe**

| **Komponente** | **Typ** | **Hersteller** | **Zusammensetzung (Gew. %)** | | | | | | | | |
|---|---|---|---|---|---|---|---|---|---|---|---|
| | | | **P11** | **P12** | **P13** | **P14** | **P15** | **P16** | **P17** | **P18** | **P19** |
| Natriumsilicat | C20 | PQ | 100 | | 70 | 70 | 70 | 70 | 70 | 70 | 70 |
| | C265 | | | 100 | | | | | | | |
| Wollastonit | Nyad G | S&B | | | 30 | | | | | | |
| Natriumsilicofluorid | techn. | Norkem | | | | 30 | | | | | |
| Aluminiumphosphat | Fabutit 206* | Budenheim | | | | | 30 | | | | |
| | Fabutit 748* | | | | | | | 30 | | | |
| | Targon HS* | BK Giulini | | | | | | | 30 | | |
| Aluminiumphosphatmischung | Fabutit 320* | Budenheim | | | | | | | | 30 | |
| Phosphat-Boratmischung | Fabutit 209* | Budenheim | | | | | | | | | 30 |

| | | | | | | | | | | | |
|---|---|---|---|---|---|---|---|---|---|---|---|
| *kommerziell erhältliche Silicathärter der angegebenen Hersteller | | | | | | | | | | | |

**Tabelle 3: Messergebnisse**

| Messwert | **Formkörper mit Bindemittel** | | | | | | | | | | | | | | | | | | |
|---|---|---|---|---|---|---|---|---|---|---|---|---|---|---|---|---|---|---|---|
| | P1 | P2 | P3 | P4 | P5 | P6 | P7 | P8 | P9 | P10 | P11 | P12 | P13 | P14 | P15 | P16 | P17 | P18 | P19 |
| FormkörperDichte** (kg/m³) | 226 | 226 | 226 | 225 | 225 | 224 | 224 | 226 | 225 | 224 | 224 | 225 | 226 | 225 | 225 | 225 | 227 | 226 | 224 |
| Druckfestigkeit (kPa) | 568 | 495 | 490 | 545 | 505 | 565 | 494 | 483 | 412 | 576 | 527 | 590 | 514 | 386 | 443 | 421 | 396 | 459 | 432 |
| Druckfestigkeit nach Heißwasserlagerung (kPa) | 360 | 352 | 390 | 368 | 434 | 427 | 432 | 436 | 399 | 508 | 293 | 104 | 293 | 333 | 311 | 323 | 305 | 327 | 334 |
| Festigkeitsabfall (%) | 37 | 29 | 21 | 32 | 14 | 24 | 13 | 19 | 3 | 12 | 44 | 82 | 43 | 14 | 30 | 23 | 23 | 29 | 23 |

| | | | | | | | | | | | | | | | | | | | |
|---|---|---|---|---|---|---|---|---|---|---|---|---|---|---|---|---|---|---|---|
| ** Mittelwert aus beiden Formkörpern (Abweichung untereinander ±0,2 kg/m³) | | | | | | | | | | | | | | | | | | | |

Die gepressten Formkörper wurden eine Minuten nach dem Pressvorgang dem Presswerkzeug entnommen. Die Formkörper P1-P3, P8-P15 wurden direkt im Anschluss bei 110°C in einem elektrisch beheizten Ofen für 12 h gelagert. Die Formkörper P4-P7 und P16-P19 wurden direkt im Anschluss mit Mikrowellenstrahlung einer Leistung von 600 W für 3,0 Minuten behandelt.

Nach Abkühlen der Formkörper auf Raumtemperatur wurden die Dichte der Formkörper und die Druckfestigkeit des ersten noch unbelasteten Formkörpers bestimmt. Der zweite Formkörper wurde in Anlehnung an die chinesische Norm für Dämmplatten aus mineralischen Materialien "General specification of inorganic ligthweight aggregate board for fireproof and insulation" JG/T 435-2014 für eine Stunde in auf 70±2 °C temperiertem Wasser gelagert. Diese Heißwasserlagerung simuliert sehr gut eine jahrelange Bewitterungsbelastung der Materialen im Außeneinsatz.

Die so behandelten die Formkörper wurden anschließend bei 110°C in einem elektrisch beheizten Ofen für 12 h gelagert und getrocknet. Nach Abkühlen auf Raumtemperatur die Druckfestigkeit des in Heißwasser gelagerten zweiten Formkörpers bestimmt.

Die gemessenen Ergebnisse der Formkörperdichte und der Druckfestigkeit des unbelasteten und belasteten Probekörpers, sowie der Wert des Festigkeitsabfalls unter Belastung aller Formkörper sind in Tabelle 3 zusammengestellt:
Bei vergleichbaren Formkörperdichten (225 ± 2) kg/m³ werden je nach verwendetem Bindemittel sehr unterschiedliche Festigkeitswerte sowohl im unbelasteten (nicht bewitterten) als auch im belasteten (bewitterten) Zustand erreicht. Eine Mindestdruckfestigkeit von 400 kPa gilt für viele Baustoffe und Materialien, die im Baubereich eingesetzt werden als Basisanforderung. Alle Formkörper hergestellt aus erfindungsgemäßen Bindemittelzusammensetzungen übertreffen diesen Wert deutlich. Auch die meisten Formkörper hergestellt aus nichterfindungsgemäßen Vergleichsbindemitteln erreichen diesen Wert. Nach der Heißwasserbelastung darf die Druckfestigkeit nicht zu stark abfallen. Ein Erreichen der Mindestanforderung im unbelasteten Zustand gilt als ideal, jedoch kann auch ein Abfall bis auf 350 kPa toleriert werden, wenn der Wert nicht weniger als 40% unter der Ausgangsfestigkeit liegt. Auch diese Forderung wird von allen erfindungsgemäßen Bindemitteln erreicht. Von den zum Vergleich hergestellten Formkörpern aus nichterfindungsgemäßen Bindemitteln erreicht keines eine Druckfestigkeitswert ≥ 350kPa nach der Heißwasserbelastung.

Die oben beschriebenen Ausführungsbeispiele repräsentieren lediglich einige spezielle Ausführungsformen der Erfindung. In dieser Hinsicht wird darauf hingewiesen, dass es für den Fachmann selbstverständlich ist, dass diese Ausführungsbeispiele lediglich dazu dienen, mögliche Ausführungsformen der vorliegenden Erfindung beispielhaft anzugeben. Der Fachmann wird daher ohne weiteres verstehen, dass darüber hinaus auch alle anderen Ausführungsformen, die die in den Ansprüchen genannten erfindungsgemäßen Merkmale oder Merkmalskombinationen aufweisen, innerhalb des Schutzumfangs der Erfindung liegen. Auf die umfassende, explizite Darstellung sämtlicher denkbarer Ausführungsformen wird hier nur der Kürze und der Lesbarkeit der Beschreibung wegen verzichtet.

## Patentansprüche

1. Bindemittelsystem mit einer Binderkomponente aus Alkalisilicat und mit einer Härterkomponente mit Anteilen an Metallsilicat-, Metallphosphat-, Metalloxid- und/oder Metallhydroxid, **dadurch gekennzeichnet, dass** das Bindemittelsystem boratfrei ist oder weniger als 2 Gew.-% an Boraten, berechnet als Anteil an B₂O₃ in Gew.-% bezogen auf das Gesamtgewicht des Bindemittelsystems, aufweist und zu wenigstens 90 Gew.-% aus einer Bindemittelbasis mit der folgenden Zusammensetzung besteht:
| | |
|---|---|
| 60-75 Gew. % | wenigstens ein pulverförmiges Alkalisilicat der molaren Formel: R₂O·x SiO₂, mit R = Na oder K und 2,0 ≤ x ≤ 3,35, mit einem Glühverlust nach Tempern für 2 Stunden bei 800°C von 8-22 Gew.-% |
| 2,9-18,1 Gew. % | wenigstens ein Aluminium-, Calcium- oder Magnesiumsilicat |
| 1,4-20 Gew. % | Zinkphosphat |
| 1,0-11,4 Gew. % | wenigstens eine Verbindung aus der Gruppe: Magnesiumoxid, Zinkoxid, Magnesiumhydroxid und Aluminiumhydroxid. |

2. Bindemittelsystem nach Anspruch 1, **dadurch gekennzeichnet, dass** der Anteil an pulverförmigen Alkalisilicat im Bereich von 62 bis 70 Gew. % liegt oder im Bereich von 65 bis 68 Gew. % liegt.

3. Bindemittelsystem nach einem der vorangehenden Ansprüche, **dadurch gekennzeichnet, dass** der Aluminiumsilicatanteil einen Anteil an wenigstens einem Kaolinmineral aufweist oder daraus besteht.

4. Bindemittelsystem nach einem der vorangehenden Ansprüche, **dadurch gekennzeichnet, dass** der Calciumsilicatanteil einen Anteil an wenigstens einem Wollastonitmineral aufweist oder daraus besteht.

5. Bindemittelsystem nach einem der vorangehenden Ansprüche, **dadurch gekennzeichnet, dass** der Magnesiumsilicatanteil einen Anteil an wenigstens einem Talkummineral aufweist oder daraus besteht.

6. Bindemittelsystem nach einem der vorangehenden Ansprüche, **dadurch gekennzeichnet, dass** der Zinkphosphatanteil aus Zinkorthophosphat einer bestimmten Hydratstufe oder aus verschiedenen Zinkorthophosphaten unterschiedlicher Hydratstufen besteht.

7. Bindemittelsystem nach einem der vorangehenden Ansprüche, **dadurch gekennzeichnet, dass** es neben der Bindemittelbasis zusätzlich noch einen Anteil wenigstens eines Zusatzes aufweist, der aus der Gruppe Farbstoffe, Pigmente und Additive zur Einstellung von Fließeigenschaften und Benetzungseigenschaften ausgewählt ist.

8. Bindemittelsystem nach einem der vorangehenden Ansprüche, **dadurch gekennzeichnet, dass** die in einer der Komponenten enthaltenen Körner oder alle in dem Bindemittel enthaltenen Körner eine wasserbeständige Beschichtung aufweisen, die sich in alkalischer Umgebung auflöst.

9. Verfahren zur Ingangsetzung der Abbindereaktion der einzelnen Komponenten eines Bindemittelsystems miteinander, wodurch das entstehende Bindemittel aushärtet, **dadurch gekennzeichnet, dass** einem Bindemittelsystem nach einem der vorangehenden Ansprüche Wasser zugesetzt wird, wobei das Gewichtsverhältnis Wasser zu Bindemittelsystem in dem Bereich von 0,5 bis 2,5 liegt.

10. Verfahren zur Herstellung eines Verbundwerkstoffs, **dadurch gekennzeichnet, dass** einem Bindemittelsystem nach einem der Ansprüche 1-8 Wasser zugesetzt wird, wobei das Gewichtsverhältnis Wasser zu Bindemittelsystem in dem Bereich von 0,5 bis 2,5 liegt und das Bindemittelsystem mit einem Füllstoff oder Funktionsstoff vermischt wird.

11. Verfahren nach einem der vorangehenden Ansprüche, **dadurch gekennzeichnet, dass** die Bindereaktion bei Temperaturen in dem Bereich von 0 bis 120°C durchgeführt wird.

12. Verfahren nach einem der vorangehenden Ansprüche, **dadurch gekennzeichnet, dass** die Bindereaktion durch Mikrowellenstrahlung unterstützt wird.

## Claims

1. A binding agent system comprising a binder component of alkali silicate and a hardener component with proportions of metal silicate, metal phosphate, metal oxide and/or metal hydroxide, **characterised in that** the binding agent system is borate-free or has less than 2 wt% of borates, calculated as a proportion of B₂O₃ in wt% with respect to the total weight of the binding agent system and for at least 90 wt% comprises a binding agent basis of the following composition:
| | |
|---|---|
| 60-75 wt% | at least one alkali silicate in powder form of the molar formula: R₂O·_{X} SiO₂, with R = Na or K and 2.0≤x≤3.35 with an ignition loss after tempering for 2 hours at 800°C of 8-22 wt%, |
| 2.9-18.1 wt% | at least one aluminum, calcium or magnesium silicate, |
| 1.4-20 wt% | zinc phosphate, and |
| 1.0-11.4 wt% | at least one compound from the group: magnesium oxide, zinc oxide, magnesium hydroxide and aluminum hydroxide. |

2. A binding agent system according to claim 1 **characterised in that** the proportion of alkali silicate in powder form is in the range of from 62 to 70 wt% or in the range of from 65 to 68 wt%.

3. A binding agent system according to one of the preceding claims **characterised in that** the aluminum silicate proportion has a proportion of at least one kaolin mineral or consists thereof.

4. A binding agent system according to one of the preceding claims **characterised in that** the calcium silicate proportion has a proportion of at least one wollastonite mineral or consists thereof.

5. A binding agent system according to one of the preceding claims **characterised in that** the magnesium silicate proportion has a proportion of at least one talcum mineral or consists thereof.

6. A binding agent system according to one of the preceding claims **characterised in that** the zinc phosphate proportion comprises zinc orthophosphate of a specific hydrate stage or various zinc orthophosphates of different hydrate stages.

7. A binding agent system according to one of the preceding claims **characterised in that** besides the binding agent basis it additionally also has a proportion of at least one additive selected from the group of colouring agents, pigments and additives for setting flow properties and wetting properties.

8. A binding agent system according to one of the preceding claims **characterised in that** the grains contained in one of the components or all grains contained in the binding agent have a water-resistant coating which dissolves in an alkaline environment.

9. A process for initiating the binding reaction of the individual components of a binding agent system with each other, whereby the resulting binding agent hardens, **characterised in that** water is added to a binding agent system according to one of the preceding claims, wherein the weight ratio of water to binding agent system is in the range of from 0.5 to 2.5.

10. A process for the production of a composite material **characterised in that** water is added to a binding agent system according to one of claims 1 to 8, wherein the weight ratio of water to binding agent system is in the range of from 0.5 to 2.5 and the binding agent system is mixed with a filler or a functional substance.

11. A process according to one of the preceding claims **characterised in that** the binding reaction is carried out at temperatures in the range of from 0 to 120°C.

12. A process according to one of the preceding claims **characterised in that** the binding reaction is promoted by microwave radiation.

## Revendications

1. Système de liant comportant un composant liant issu d'un silicate alcalin et un composant durcisseur contenant des fractions de silicate métallique, de phosphate métallique, d'oxyde métallique et/ou d'hydroxyde métallique, **caractérisé en ce que** le système de liant est exempt de borate ou présente moins de 2 % en poids de borates, calculés sous la forme de fractions, en % en poids, de B₂O₃ par rapport au poids total du système de liant, et est constitué pour au moins 90 % en poids d'une base de liant présentant la composition ci-dessous :
| | |
|---|---|
| 60 à 75 % en poids | d'au moins un silicate alcalin pulvérulent, de formule molaire : R₂O x SiO₂, avec R = Na ou K et 2,0 ≤ x ≤ 3,35, avec une perte par calcination après recuit pendant 2 heures à 800 °C comprise entre 8 et 22 % en poids, |
| 2,9 à 18,1 % en poids | d'au moins un silicate d'aluminium, de calcium ou de magnésium, |
| 1,4 à 20 % en poids | de phosphate de zinc, |
| 1,0 à 11,4 % en poids | d'au moins un composé issu du groupe comprenant : oxyde de magnésium, oxyde de zinc, hydroxyde de magnésium et hydroxyde d'aluminium. |

2. Système de liant selon la revendication 1, **caractérisé en ce que** la fraction de silicate alcalin pulvérulent se situe dans la plage comprise entre 62 et 70 % en poids ou dans la plage comprise entre 65 et 68 % en poids.

3. Système de liant selon l'une des revendications précédentes, **caractérisé en ce que** la fraction de silicate d'aluminium présente une fraction d'au moins un minéral de type kaolin ou en est constituée.

4. Système de liant selon l'une des revendications précédentes, **caractérisé en ce que** la fraction de silicate de calcium présente une fraction d'au moins un minéral de type wollastonite ou en est constituée.

5. Système de liant selon l'une des revendications précédentes, **caractérisé en ce que** la fraction de silicate de magnésium présente une fraction d'au moins un minéral de type talc ou en est constituée.

6. Système de liant selon l'une des revendications précédentes, **caractérisé en ce que** la fraction de phosphate de zinc est constituée d'orthophosphate de zinc présentant un niveau d'hydrate défini ou de différents orthophosphates de zinc présentant différents niveaux d'hydrate.

7. Système de liant selon l'une des revendications précédentes, **caractérisé en ce qu'**il présente, en plus de la base de liant, encore une fraction d'au moins un additif choisi dans le groupe constitué des colorants, pigments et additifs en vue d'ajuster les propriétés d'écoulement et les propriétés de mouillage.

8. Système de liant selon l'une des revendications précédentes, **caractérisé en ce que** les grains contenus dans l'un des composants ou tous les grains contenus dans le liant présentent un revêtement résistant à l'eau qui se dissout en milieu alcalin.

9. Procédé de démarrage de la réaction de prise de composants individuels d'un système de liant, grâce à laquelle le liant engendré durcit, **caractérisé en ce que** de l'eau est ajoutée à un système de liant selon l'une des revendications précédentes, le rapport pondéral de l'eau par rapport au système de liant se situant dans la plage comprise entre 0,5 et 2,5.

10. Procédé de production d'un matériau composite, **caractérisé en ce que** de l'eau est ajoutée à un système de liant selon l'une des revendications 1 à 8, le rapport pondéral de l'eau par rapport au système de liant se situant dans la plage comprise entre 0,5 et 2,5 et le système de liant étant mélangé avec une charge ou un matériau fonctionnel.

11. Procédé selon l'une des revendications précédentes, **caractérisé en ce que** la réaction de liaison est mise en œuvre à des températures situées dans la plage comprise entre 0 et 120 °C.

12. Procédé selon l'une des revendications précédentes, **caractérisé en ce que** la réaction de liaison est favorisée par un rayonnement micro-ondes.
